# EUROPEAN PATENT SPECIFICATION

(11) **EP 1 651 064 B1**
(45) Date of publication and mention of the grant of the patent: **08.10.2014**
(21) Application number: 03817358.9
(22) Date of filing: 07.08.2003
(51) Int. Cl.: A23N 12/02, A23N 12/00

(54) **FRUIT CLEANING APPARATUS WITH DUST COLLECTION SYSTEM AND FRUIT CLEANING PROCESS USING THE SAME**
OBSTREINIGUNGSVORRICHTUNG MIT STAUBAUFFANGSYSTEM UND DIESE VERWENDENDES OBSTREINIGUNGSVERFAHREN
APPAREIL DE LAVAGE DE FRUITS PRÉSENTANT UN SYSTÈME DE COLLECTE DE POUSSIÈRE ET PROCÉDÉ DE NETTOYAGE DE FRUITS UTILISANT LEDIT APPAREIL

(30) Priority: 03.07.2003 KR 2003045037
(43) Date of publication of application: 03.05.2006
(73) Proprietor: JEJU CITRUS GROWER'S AGRICULTURAL COOPERATIVE, Jeju-do 697-801 (KR)
(72) Inventor: OH, Hong-sik, Jeju-do 697-815 (KR)
(74) Representative: Grünecker, Kinkeldey, Stockmair & Schwanhäusser
(86) International application number: PCT/KR2003/001592
(87) International publication number: WO 2005/002368

(56) References cited:
- FR-A- 1 400 766
- GB-A- 1 004 438
- GB-A- 190 902 219
- JP-A- 8 038 136
- JP-U- 61 037 794
- US-A- 2 073 837
- US-A- 2 199 831
- US-A- 5 285 548
- US-A- 5 329 845

## Description

### TECHNICAL FIELD

The present invention relates to a fruit cleansing apparatus and fruit cleansing steps using the same, and more particularly to a fruit cleansing apparatus including a dust collecting system, a brush roll driving unit, and a blowing system and fruit cleansing steps using the same.

### BACKGROUND ART

As well known, fruit growing farmhouses spray fruit gardens with a large amount of agricultural chemicals in order to prevent fruits from being damaged by disease and harmful insects. After harvesting fruits, the fruits contaminated by such agricultural chemicals are cleansed using cleansing solutions such as water and are dried to pack and forward the fruits.

However, the cleansing step performed using such cleansing solution significantly deteriorates the sugar content and the freshness of fruits, in particular, oranges.

To be specific, in a case of oranges, a plurality of stomata having a relatively large diameter are distributed on the peel of an orange. Thus, a drying step is completed with a large amount of cleansing solution that contains alien substances such as agricultural chemicals remaining on the peels of the oranges. The oranges on which the cleansing step is completed completely transpire through stomata. While the oranges transpire through stomata, sugar contents contained in the flesh of the oranges evaporate.

Also, as described above, according to the conventional fruit cleansing apparatus using cleansing solutions such as water, a drying step of drying the cleansing solution must be performed. Thus, a drying device is separately required and controlling means for controlling the driving device is also required. In order to perform the drying step, since the above-described drying device must be separately purchased and installed, expenses for purchasing, maintaining, and repairing the drying device must be met and it is difficult to secure a space for installing the drying device, that is, a working space.

On the other hand, in order to spray the above-described cleansing solution, nozzles are commonly and widely used. However, nozzles cause an insanitary cleansing step. In more detail, according to nozzles, nozzle holes through which cleansing solutions are sprayed and clearances formed between the nozzle holes and pressing portions adjacent to the nozzle holes are controlled to spray the cleansing solution with minuteness or at high speed. The clearances become dirty due to dusts containing agricultural chemical powders generated during the step of cleansing fruits and the cleansing solution that pass through the clearances are sprayed onto fruits with the agricultural chemicals contained. In order to solve such a problem, there are no solutions except for frequently cleansing the nozzles.

Thus, since the cleansing step must be temporarily stopped in order to cleanse the nozzles, working efficiency significantly deteriorates. However, since nozzles are not frequently cleansed in most cases, fruits are directly coated with the contaminated cleansing solution and are dried such that the cleansed fruits are actually further contaminated.

Also, as described above, since the conventional fruit cleansing apparatus cannot remove a large amount of generated dusts, it is not possible to provide pleasant working environments.

As described above, according to the conventional fruit cleansing apparatus and the fruit cleansing steps using the same, quality of fruits significantly deteriorates and the term of distribution of fruits is reduced due to the above-described problems. Also, workers are inevitably exposed to dusts containing agricultural chemicals to suffer from occupational diseases such as respiratory diseases.

US2,199,831 discloses an apparatus for rubbing or brushing fruit and the like, and in particular an apparatus in which fruit or other articles of generally globular shape may be subjected to frictional action while advancing through a supporting runway formed by members which extend transversely of the path of travel of the fruit through the machine and some of which are rotatable.

### DISCLOSURE OF INVENTION

It is an object of the present invention to provide a fruit cleansing apparatus including a dust collecting system, a brush roll driving unit, and a blowing system and a fruit cleansing method using the same.

According to a first aspect of the invention there is provided a fruit cleansing apparatus as defined in claim 1. According to a second aspect of the invention there is provided a fruit cleansing method as defined in claim 9.

To achieve the object of the present invention, there is provided a fruit cleansing apparatus for performing fruit cleansing steps while fruits are transferred by a brush roll driving unit composed of a driving motor, a plurality of brush rolls, and dynamic force transmitting means for connecting the driving motor to the plurality of brush rolls, the fruit cleansing apparatus comprising hopper-shaped lower covers positioned below the plurality of brush rolls, blowing means comprising a blowing fan connected to the lower ends of the lower covers to blow air toward the plurality of brush rolls, upper covers that are positioned above the plurality of brush rolls and whose upper portions are narrow and whose lower portions are wide to be symmetrical with the lower covers, and dust collecting means air-tight connected to the upper ends of the upper covers to perform vacuum air-absorption toward the upper portion of the plurality of brush rolls.

The blowing means preferably further comprises a boiler connected to the hind end of the blowing fan to provide warm wind to the plurality of brush rolls.

The dust collecting means preferably comprises a case, an air-absorbing unit positioned in the center of the case to divide the case into an upper portion and a lower portion, a filter positioned in the lower portion of the air-absorbing unit, air-absorbing holes formed on the side walls of the case adjacent to the filter, and exhausting holes formed on the upper end of the case.

The air-absorbing unit is preferably positioned on the filter and preferably comprises an air-absorbing guide that is positioned on the filter and in which a hollow is formed and an impeller module where an air-absorbing wing is positioned in the hollow to absorb air in the lower portion and to exhaust air in the upper portion.

The upper ends of the upper covers are preferably connected to the exhausting holes by bellows.

An entrance side flexible gate and an exit side flexible gate made of flexible synthetic resin plates are preferably vertically loaded between both ends of the upper covers and the brush rolls corresponding to the upper covers.

In each of the entrance side flexible gate and the exit side flexible gate, a plurality of cut portions obtained by vertically cutting the flexible gate from the lower end to a predetermined height are preferably separated from each other by a predetermined distance.

First sensors for detecting the number of received fruits are preferably further formed around the entrance side flexible gate.

Second sensors for detecting the number of discharged fruits are preferably further formed around the exit side flexible gate.

The first sensors and the second sensors are preferably one or more optical sensors, proximity sensors, or load sensors.

A controlling portion connected to the driving motor, the blowing fan, the dust collecting means, and preferably the first sensors, and the second sensors is further comprised to control the driving motor, the blowing fan, the dust collecting means, and preferably the first sensors, and the second sensors.

At this time, it is preferable that the first sensors and the second sensors transfer detected signals to the controlling portion and that the controlling portion accumulatively calculate the detected signals of the first sensors and subtract the detected signals of the second sensors from an accumulatively calculated value to control and output the strength of the driving motor, the blowing fan, and the dust collecting means.

The plurality of brush rolls are preferably cylindrical and preferably have a plurality of furs on the outer circumferences thereof.

The plurality of furs are preferably horses' furs.

A fruit cleansing method performed by the fruit cleansing apparatus according to the present invention of the above-described structure preferably comprises a fruit number calculating step of calculating the number of fruits to be cleansed by a fruit cleansing apparatus, a cleansing step of controlling a blowing amount, a cleansing time, and a vacuum air-absorbing amount in accordance with the calculated number of fruits, and an additive coating step of detecting the number of fruits that have undergone the cleansing step and controlling an additive in accordance with the number of fruits to spray the additive.

The fruit number calculating step preferably comprises an accumulating step of detecting and accumulating the number of fruits received to a fruit cleansing apparatus and a subtraction step of detecting the number of fruits that have undergone the cleansing step to subtract the number of fruits from the accumulated value obtained by the accumulating step.

The cleansing step preferably further comprises a controlling step of re-controlling the blowing amount, the cleansing time, and the vacuum air-absorbing amount in accordance with the calculated value obtained by the subtraction step.

The above-described dust collecting means corresponds to the dust collector as described later.

### BRIEF DESCRIPTION OF THE DRAWINGS

The object and advantages of the present invention will be more clearly understood with reference to accompanying drawings and detailed description of the preferred embodiment below.
Fig. 1 is a schematic block diagram of a fruit cleansing apparatus according to a first embodiment of the present invention;
Fig. 2 illustrates the inner structure of the fruit cleansing apparatus of Fig. 1;
Fig. 3 is a sectional view taken along the line A-A' of Fig. 2;
Fig. 4 is a perspective view illustrating an enlargement of a flexible gate of Fig. 2;
Fig. 5 is a sectional view taken along the line B-B' of the dust collector illustrated in Fig. 3;
Fig. 6 is a schematic block diagram of a fruit cleansing apparatus according to a second embodiment of the present invention;
Fig. 7 illustrates the inner structure of the fruit cleansing apparatus of Fig. 6; and
Fig. 8 illustrates fruit cleansing steps according to the second embodiment of the present invention.

### BEST MODE FOR CARRYING OUT THE INVENTION

Preferred embodiments of the present invention will be illustrated in detail with reference to the attached drawings. This invention may, however, be embodied in many different forms and should not be construed as being limited to the embodiments set forth herein.

### [First Embodiment]

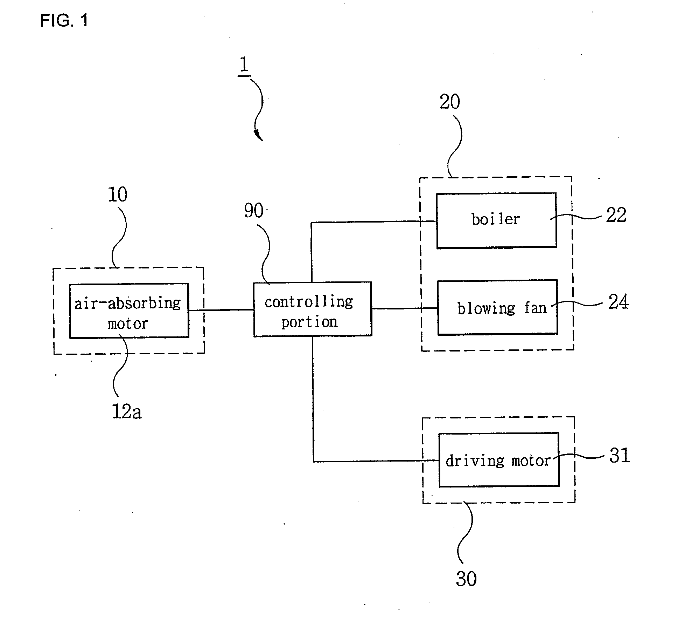

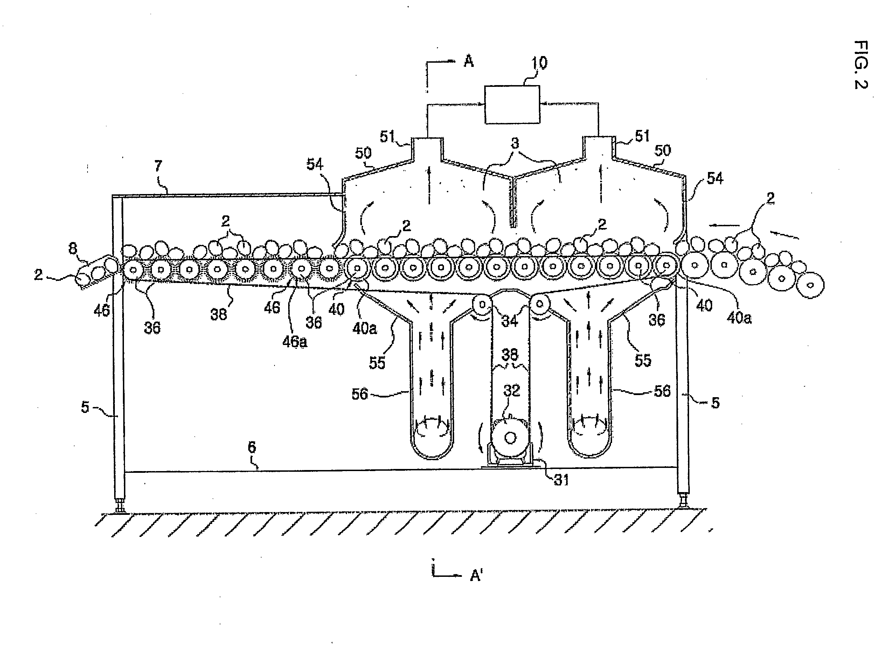

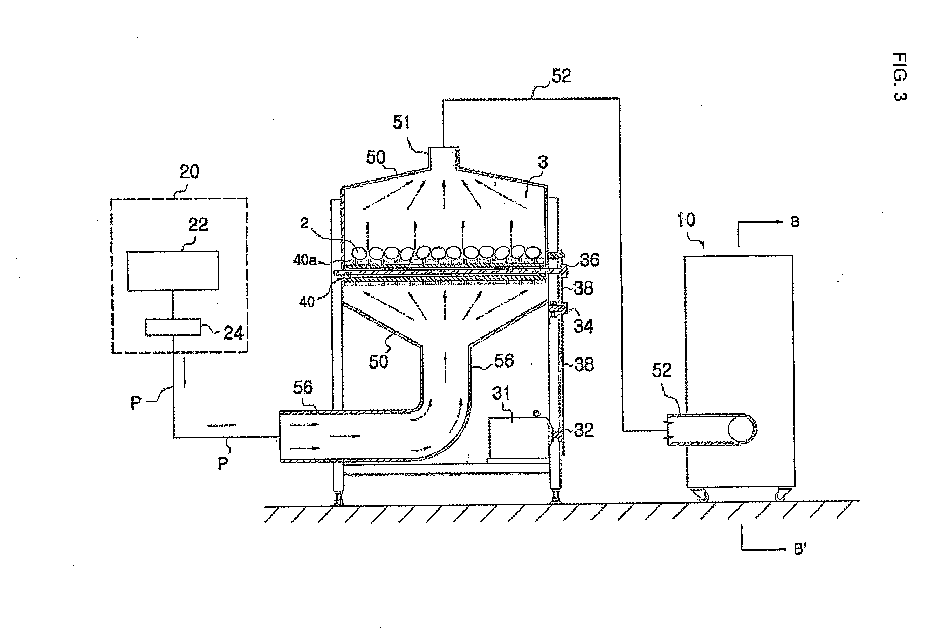

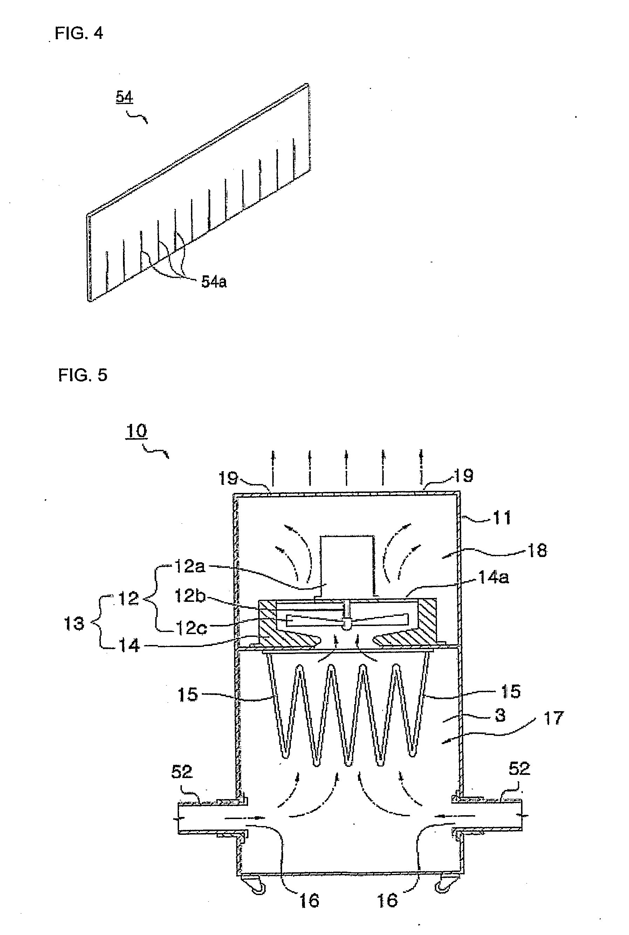

Fig. 1 is a block diagram of a fruit cleansing apparatus 1 according to a first embodiment of the present invention. Fig. 2 illustrates the inner structure of the fruit cleansing apparatus of Fig. 1. Fig. 3 is a sectional view taken along the line A-A' of Fig. 2. Fig. 4 is a perspective view illustrating an enlargement of a flexible gate 54 of Fig. 2. Fig. 5 is a sectional view taken along the line B-B' of the dust collector 10 illustrated in Fig. 3.

As illustrated in Fig. 1, the fruit cleansing apparatus 1 according to the present invention is an automated device in which the respective devices are controlled by a controlling portion 90 and has a structure in which a dust collector 10 including an air-absorbing motor 12a, blowing means 20 composed of a boiler 22 and a blowing fan 24, and a driving motor 31 of a brush roll unit 30 are connected to the controlling portion 90, respectively.

The present invention will be described in detail with reference to Figs. 2 to 5. A tunnel-shaped housing (that is not denoted by a reference numeral) whose inside is closed such that the air outside does not come into the housing is included. In more detail, a plurality of stays 5 are stood such that a rectangular space is provided. Each of side walls (that are denoted by reference numerals) is provided between two stays 5. One or more upper covers 50 with narrow upper portions and wide lower portions are sealed up and combined with the upper portions of the side walls on one side. A panel-shaped cover 7 is provided in a portion adjacent to the upper covers 50 and extends to the end of the other side such that the inside is intercepted from the air outside. A panel 6 for sealing up the lower end surface among the respective stays 5 is formed such that, as illustrated in Fig. 2, a predetermined portion of one wall and a predetermined portion of another wall are opened to be closed by flexible gates 54 as described later.

As illustrated in Fig. 5, a plurality of cut portions 54a having predetermined height and separated from each other by a predetermined distance are formed in the flexible gate 54 from the lower end of the flexible gate 54. The flexible gate 54 helps the dust collector 10 as described later to easily vacuum up the inner space of the fruit cleansing apparatus 1 and helps fruits to freely enter the fruit cleansing apparatus 1.

On the other hand, in the center of the inside of the housing (that is not denoted by a reference numeral), a plurality of brush rolls 40 and 46 separated from each other by a predetermined distance are rotatably and horizontally installed so as to penetrate the side walls (that are not denoted by reference numerals) (refer to Fig. 3).

The above-described driving motor 31 is installed in a predetermined portion of the panel 6 that forms an airtight space. A chain 38 for transmitting the rotational energy of the driving motor 31 to the plurality of first and second brush rolls 40 and 46 is included. In more detail, a gear 32 loaded in the rotation shaft (not shown) of the driving motor 31 is connected to gears 36 formed in each one end of the first and second brush rolls 40 and 46 by the chain 38 (refer to Figs. 1 and 3).

At this time, in order to apply uniform tension to the chain 38 such that the chain 38 is prevented from deviating and that dynamic force is correctly transmitted to the first and second brush rolls 40 and 46, pinions 34 are interposed between the driving motor 31 and the first and second brush rolls 40 and 46. In Fig. 2, the gears 36 on the sides of the first brush rolls 40 are separated from the pinions 34. However, the pinions 34 may be engaged with the gears 36 on the sides of the brush rolls 40 and 46 with the gears 36 chained with the chain 38.

The first and second brush rolls 40 and 46 are cylindrical bars and a plurality of furs 40a 46a are formed on the outer circumferences thereof. At this time, the furs 40a formed on the first brush rolls 40 have a diameter smaller than that of the furs 46a formed on the second brush rolls 46 and are denser than the furs 46a. The furs 40a formed on the first brush rolls 40 are preferably furs in horses' manes that do not damage the surfaces of fruits, that maximize frictional force, and that are hardly deformed.

On the other hand, the plurality of above-described upper covers 50 are provided above the first brush rolls 40 and funnel-shaped lower covers 55 whose upper portions are wide and whose lower portions are narrow are provided below the first brush rolls 40. At this time, ducts 51 and 56 are formed on the uppermost portions of the upper covers 50 and on the lowermost portions of the lower covers 55 and the upper covers 50 and the lower covers 55 are symmetrical with each other. The ducts 51 of the upper covers 50 are connected to the dust collector 10 as described later by bellows 52 and the ducts 56 of the lower covers 55 are sequentially connected to the blowing fan 24 as described later and the boiler 22 by a blowing pipe P.

The inner structure of the dust collector 10 will now be described with reference to Fig. 5.

As illustrated in Fig. 5, the dust collector 10 includes an air-absorbing portion 17 whose inside is intercepted from the air outside, an exhausting portion 18 for exhausting the absorbed air that passed through the air-absorbing portion 17 to the outside air, an air-absorbing unit 13 provided between the air-absorbing portion 17 and the exhausting portion 18, and a case 11 for intercepting the air-absorbing portion 17, the exhausting portion 18, and the air-absorbing unit 13 from the air outside. In more detail, air-absorbing holes 16 that penetrate both walls in the lower end of the case 11 are formed in the air-absorbing portion 17 and the above-described bellows 52 are air-tight combined with the air-absorbing holes 16. A wrinkled filter 15 whose area is increased is provided to be adjacent to the air-absorbing unit 13. At this time, the filter 15 air-tight combined with the air-absorbing unit 13 such that the air does not enter the air-absorbing unit 13 without passing through the filter 15.

On the other hand, a plurality of exhausting holes 19 are formed in the upper end of the case 11 that forms the exhausting portion 18 such that, when the air absorbed by the air-absorbing unit 13 as described later passes through the above-described filter 15, only the clean air that is filtered is exhausted to the outside through the exhausting holes 19.

The air-absorbing unit 13 for performing such an absorbing step includes an impeller module 12 composed of an air-absorbing motor 12a, a rotation shaft 12b, and an air-absorbing wing 12c.

A through hole 14a is formed such that the air-absorbing motor 12a is supported downward and that the air absorbed by the impeller module 12 can enter the exhausting portion 18. A hollow whose lower portion is narrow is formed such that uniform pressure can be applied to the clean air that passed through the filter 15. An air-absorbing guide 14 having a space wider than the hollow is provided in the exhausting portion 18. Also, the above-described air-absorbing wing 12c is provided in the space of the air-absorbing guide 14.

In Fig. 5, the impeller module and the air-absorbing guide 14 are settled in the exhausting portion 18. However, the air-absorbing unit having the above-described structure may be provided in the air-absorbing portion 17. The above-described air-absorbing unit 13 may be provided in a chamber additionally formed between the exhausting portion 18 and the air-absorbing portion 17.

The operation principle of the first embodiment having the above-described structure will now be described. When fruit cleansing steps start, the impeller module 12, the driving motor 31, and the blowing fan 24 start to operate. Also, a worker may selectively operate the boiler 22 in accordance with seasons or weathers. Considering that fruits are commonly harvested in autumn or winter, hereinafter, it is premised that the boiler 22 is operated.

When the driving motor 31 is rotated, the plurality of brush rolls 40 and 46 connected to the chain 38 are rotated at uniform speed. The air is heated to a predetermined temperature by the steam of the boiler 22 and the blowing fan 24 operates at predetermined speed such that the air heated by the boiler 22 is exhausted upward to the first brush rolls 40 via the blowing pipe P, the ducts 56, and the lower covers 55. At this time, the surfaces of fruits 2 are rubbed with the furs 40a formed on the first brush rolls 40 and the fruits 2 are horizontally moved in the direction of the second brush rolls 46. At this time, the alien substances such as agricultural chemicals attached to the surfaces of the fruits 2 are separated to generate dusts 3. Thus, the warm air discharged upward by the above-described blowing means 20 leads to the upper portion and completely dries the dew generated on the surfaces of the fruits 2. On the other hand, since the ducts 51 of the upper covers 50 that are symmetrical with the lower covers 55 and the bellows are air-tight combined with the above-described dust collector 10, as described above, the dusts 3 led to the upper portion are vacuum flown to the air-absorbing portion 17 of the dust collector 10 via the upper covers 50, the ducts 51, and the bellows 52. Since the principle of flowing the air that includes the dusts 3 to the air-absorbing portion 17 is identical with the operation principle of the above-described dust collector 10, description thereof will be omitted.

On the other hand, when the rubbing operation and the horizontal movement proceed to some extent, the fruits 2 reach the second brush rolls 46 via the flexible gate 54 provided in the exit, undergo the final cleansing step performed by the second brush rolls 46 to be completely cleansed, and are discharged through a fruit guide 8.

As described above, the dew on the surfaces of the fruits are dried, the fruits are cleansed by rubbing the fruits with the furs, and the dusts 3 generated by the cleansing steps are vacuum absorbed to filter alien substances such that only clean air is exhausted to the outside. Thus, it is possible to complete the cleansing steps in a short time and to completely cleanse fruits.

However, according to the above-described first embodiment, it is not possible to optimize an effective cleansing environment in accordance with the number of received fruits. This is because uniform blowing speed and uniform vacuum degree are provided and the brush rolls are driven at uniform speed regardless of the number of the received fruits in determined data. Also, since a step of coating the fruits with an additive such as a brightener so as to increase the term of distribution of the fruits is not included, it is not possible to forward good-looking fruits.

### [Second Embodiment]

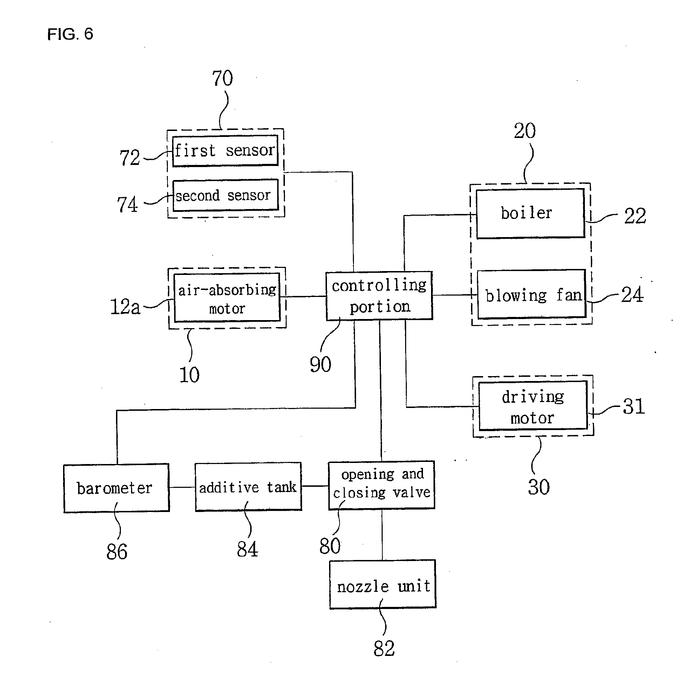

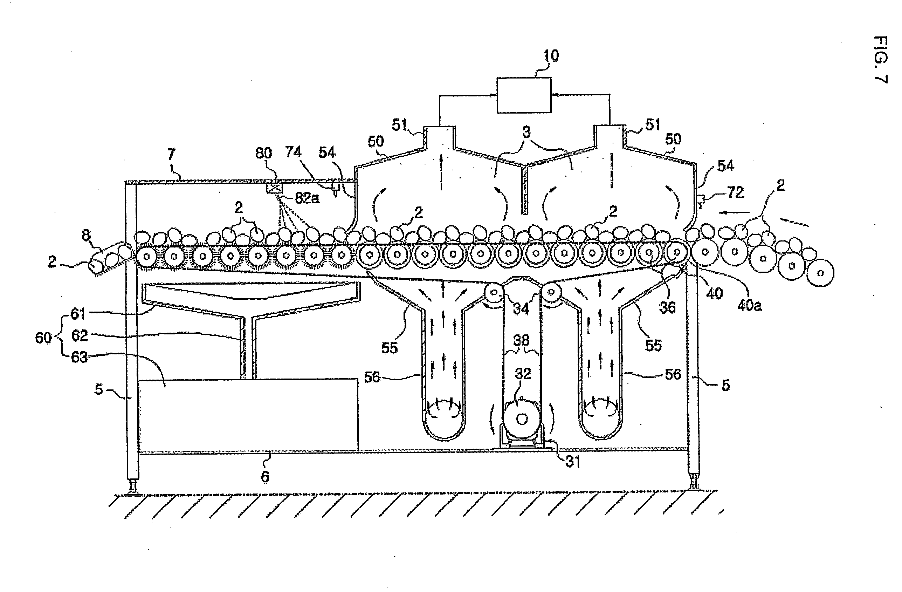

Fig. 6 is a schematic block diagram of a fruit cleansing apparatus according to a second embodiment of the present invention. Fig. 7 illustrates the inner structure of Fig. 6. A fruit cleansing apparatus 1 having a structure in which the shortcomings of the fruit cleansing apparatus according to the first embodiment are compensated for is disclosed.

Referring to Figs. 6 and 7, the fruit cleansing apparatus according to the second embodiment includes a sensor unit 70, an opening and closing valve 80, a nozzle unit 82 connected to one end of the opening and closing valve 80, an additive tank 84 connected to the other end of the opening and closing valve 80, the additive tank 84 for accommodating a brightener, and a barometer 86 for providing predetermined air pressure to the additive tank 84 such that the brightener can be sprayed through the nozzle unit 82 at high speed in addition to the components of the fruit cleansing apparatus according to the first embodiment. Here, the sensor unit 70, the opening and closing valve 80, and the barometer 86 are connected to the controlling portion 90 to be controlled by the controlling portion 90. The sensor unit 70 includes a first sensor 72 and a second sensor 74 as described later.

To be more specific with reference to Fig. 7, one or more first sensors 72 are separated from each other by the same distance to be adjacent to the flexible gate 54 through which the fruits 2 are received.

The first sensors 72 are separated from each other by a uniform distance in the longitudinal direction of the above-described first brush rolls 40 and count the number of fruits received through the flexible gate 54. The first sensors 72 can be realized by proximity sensors, optical sensors, or load sensors for sensing the weight of the fruits.

The second sensors 74 whose number is equal to the number of first sensors 72 are arranged to be adjacent to the flexible gate 54 on the side of the exit through which the fruits 2 completed with the cleansing steps are discharged to count the number of fruits 2 discharged from the flexible gate 54 on the side of the exit.

One or more nozzles 82a and the opening and closing valve 80 for collectively opening and closing the plurality of nozzles 82a are arranged to be separated from the second sensors 74 by a predetermined distance. The opening and closing valve 80 is preferably realized by a solenoid valve having high electronic sensitivity.

A waste additive taking unit 60 is included below the second brush rolls 46. In more detail, the waste additive taking unit 60 includes a funnel-shaped eaves trough 61, an eaves pipe 62 integrated with the through hole formed in the center of the eaves trough 61, and a waste additive taking case 63 connected to the eaves pipe 62. The additive such as the brightener that is sprayed through the plurality of nozzles 82a and that drops downward from the second brush rolls 46 is taken away such that the fruit cleansing apparatus can be kept clean.

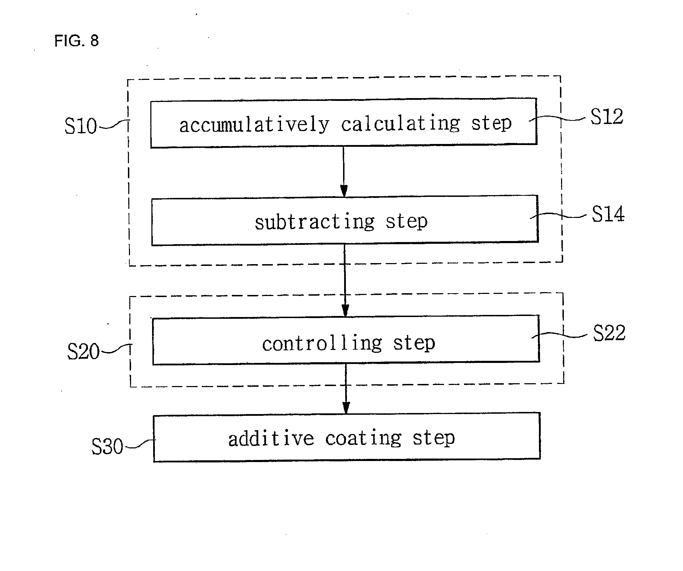

Fig. 8 illustrates fruit cleansing steps according to the second embodiment.

The fruit cleansing apparatus 1 according to the second embodiment having the above-described structure perform the following cleansing steps and additive coating steps.

After a fruit number calculating step S10 for calculating the number of fruits 2 to be cleansed by the fruit cleansing apparatus 1, a cleansing step S20 for controlling the blowing amount of the blowing fan 24 and the rotation speed of the driving motor 31 and the air-absorbing motor 12a in accordance with the calculated number of fruits to control the cleansing time and the vacuum air-absorbing amount After the cleansing step S20, an additive coating step S30 of detecting the number of completely cleansed fruits and of spraying the additive in accordance with the number is completed.

To be more specific with reference to Figs. 6 to 8, in the fruit number calculating step S10, an accumulatively calculating step S12 of detecting the number of fruits 2 by the first sensors 72 while the fruits 2 to be cleansed pass through the flexible gate 54 on the side of the entrance, of transferring the number to the controlling portion 90, and of the controlling portion 90 accumulatively calculating detected signals is performed.

At this time, the accumulatively calculating step S12 is continuously performed until the completely cleansed fruits 2 are detected by the second sensors 74. Then, a subtracting step S14 of detecting the number of fruits on which the cleansing step S20 is performed and of subtracting the number from the accumulatively calculated value obtained in the accumulatively calculating step S12 is performed.

In the cleansing step S20 after the above-described subtracting step S 14, the blowing amount of the blowing fan 24 and the rotation speed of the driving motor 31 and the air-absorbing motor 12a are controlled by the calculated value obtained after completing the subtracting step S14 to perform a controlling step S22 for re-controlling the cleansing time and the vacuum air-absorbing amount such that an optimized cleansing environment is provided in accordance with the number of fruits.

The fruits that have undergone the cleansing step S20 are moved to the second brush rolls 46 as described above. Then, the second sensor 74 detects the number of fruits that have undergone the cleansing step as described above such that the number is transmitted to the controlling portion 90. The controlling portion 90 performs the above-described fruit number calculating.step S10 and controls the opening and closing speed of the above-described opening and closing valve 80 in proportion to the number of fruits detected by the second sensor 74 such that the opening and closing valve 80 is opened and closed to perform an additive coating step S30 for controlling the amount of the additive in accordance with the number of fruits to be coated with the additive to spray the additive to the fruits.

### INDUSTRIAL APLICABILITY

As described above, according to the present invention, it is possible to perform fruit cleansing steps without cleansing solutions such as water by applying a dust collecting system and to provide a fruit cleansing apparatus capable of maximizing the sugar content and the freshness of fruits by such cleansing steps.

Also, since a blowing step is provided together with a dust collecting step, it is possible to remove the dew generated on the surfaces of fruits and to lead the dusts generated during the cleansing steps to an upper portion such that the dust collecting step can be smoothly performed.

Also, since it is possible to provide an optimal cleansing environment by a controlling portion and to spray an additive with the amount of the additive controlled, it is possible to improve energy efficiency and to save materials such that it is possible to significantly reduce the expenses caused by the cleansing steps.

## Claims

1. A fruit cleansing apparatus for performing fruit cleansing steps while fruits are transferred by a brush roll driving unit of the fruit cleansing apparatus, the brush roll driving unit composed of a driving motor, a plurality of brush rolls, and dynamic force transmitting means for connecting the driving motor to the plurality of brush rolls, the fruit cleansing apparatus further comprising:
hopper-shaped lower covers positioned below the plurality of brush rolls; blowing means comprising a blowing fan connected to the lower ends of the lower covers to blow air toward the plurality of brush rolls;
upper covers that are positioned above the plurality of brush rolls and whose upper portions are narrow and whose lower portions are wide to be symmetrical with the lower covers; and
dust collecting means air-tight connected to the upper ends of the upper covers to perform vacuum air-absorption toward the upper portion of the plurality of brush rolls; the fruit cleansing apparatus further comprising a controlling portion connected to the driving motor, the blowing fan and the dust collecting means to control the driving motor, the blowing fan and the dust collecting means.

2. A fruit cleansing apparatus according to claim 1, wherein the blowing means further comprises a boiler connected to the hind end of the blowing fan to provide warm wind to the plurality of brush rolls; and/or wherein the dust collecting means comprises:
a case;
an air-absorbing unit positioned in the center of the case to divide the case into an upper portion and a lower portion;
a filter positioned in the lower portion of the air-absorbing unit;
air-absorbing holes formed on the side walls of the case adjacent to the filter; and
exhausting holes formed on the upper end of the case; and/or
wherein the air-absorbing unit is positioned on the filter and comprises:
an air-absorbing guide that is positioned on the filter and in which a hollow is formed; and
an impeller module where an air-absorbing wing is positioned in the hollow to absorb air in the lower portion and to exhaust air in the upper portion.

3. A fruit cleansing apparatus according to claim 2, wherein the upper ends of the upper covers are connected to the exhausting holes by bellows.

4. A fruit cleansing apparatus according to claim 1, wherein an entrance side flexible gate and an exit side flexible gate made of flexible synthetic resin plates are vertically loaded between both ends of the upper covers and the brush rolls corresponding to the upper covers; and optionally
wherein, in each of the entrance side flexible gate and the exit side flexible gate, a plurality of cut portions obtained by vertically cutting the flexible gate from the lower end to a predetermined height are separated from each other by a predetermined distance.

5. A fruit cleansing apparatus according to claim 4
wherein first sensors for detecting the number of received fruits are further formed around the entrance side flexible gate; and/or
wherein second sensors for detecting the number of discharged fruits are further formed around the exit side flexible gate.

6. A fruit cleansing apparatus according to 5, wherein the first sensors and the second sensors are one or more optical sensors, proximity sensors, or load sensors.

7. A fruit cleansing apparatus according to claim 1 or 4, further comprising a controlling portion connected to the driving motor, the blowing fan, the dust collecting means, the first sensors, and the second sensors to control the driving motor, the blowing fan, the dust collecting means, the first sensors, and the second sensors; and/or
wherein the first sensors and the second sensors transfer detected signals to the controlling portion, and wherein the controlling portion accumulatively calculates the detected signals of the first sensors and subtracts the detected signals of the second sensors from an accumulatively calculated value to control and output the strength of the driving motor, the blowing fan, and the dust collecting means.

8. A fruit cleansing apparatus according to claim 1, wherein the plurality of brush rolls are cylindrical and have a plurality of furs on the outer circumferences thereof; and optionally
wherein the plurality of furs are horse furs.

9. A fruit cleansing method comprising:
a fruit number calculating step of calculating the number of fruits to be cleansed by a fruit cleansing apparatus;
a cleansing step of controlling a blowing amount, a cleansing time, and a vacuum air-absorbing amount in accordance with the calculated number of fruits; and
an additive coating step of detecting the number of fruits that have undergone the cleansing step and controlling an additive in accordance with the number of fruits to spray the additive.

10. A fruit cleansing method according to claim 9, wherein the fruit number calculating step comprises: an accumulating step of detecting and accumulating the number of fruits received to a fruit cleansing apparatus; and a subtraction step of detecting the number of fruits that have undergone the cleansing step to subtract the number of fruits from the accumulated value obtained by the accumulating step.

11. A fruit cleansing method according to claim 9 or 10, wherein the cleansing step further comprises a controlling step of re-controlling the blowing amount, the cleansing time, and the vacuum air-absorbing amount in accordance with the calculated value obtained by the subtraction step.

## Patentansprüche

1. Vorrichtung zum Reinigen von Früchten, mit der Schritte zum Reinigen von Früchten durchgeführt werden, während Früchte mittels einer Bürstenwalzen-Antriebseinheit der Vorrichtung zum Reinigen von Früchten transportiert werden, wobei die Bürstenwalzen-Antriebseinheit aus einem Antriebsmotor, einer Vielzahl von Bürstenwalzen sowie einer dynamischen Kraftübertragungseinrichtung besteht, die den Antriebsmotor mit der Vielzahl von Bürstenwalzen verbindet, und die Vorrichtung zum Reinigen von Früchten des Weiteren umfasst:
trichterförmige untere Gehäuse, die unterhalb der Vielzahl von Bürstenwalzen angeordnet sind;
eine Blaseinrichtung, die ein Gebläse umfasst, das mit den unteren Enden der unteren Gehäuse verbunden ist, um Luft in Richtung der Vielzahl von Bürstenwalzen zu blasen;
obere Gehäuse, die oberhalb der Vielzahl von Bürstenwalzen angeordnet sind, deren obere Abschnitte schmal sind und deren untere Abschnitte breit und symmetrisch zu den unteren Gehäusen sind; sowie
eine Staubauffangeinrichtung, die luftdicht mit den oberen Enden der oberen Gehäuse verbunden ist, um Absaug-Luftabsorption zu dem oberen Abschnitt der Vielzahl von Bürstenwalzen hin durchzuführen, wobei die Vorrichtung zum Reinigen von Früchten des Weiteren einen Steuerabschnitt umfasst, der mit dem Antriebsmotor, dem Gebläse und der Staubauffangeinrichtung verbunden ist, um den Antriebsmotor, das Gebläse und die Staubauffangeinrichtung zu steuern.

2. Vorrichtung zum Reinigen von Früchten nach Anspruch 1, wobei die Blaseinrichtung des Weiteren einen Kessel umfasst, der mit dem hinteren Ende des Gebläses verbunden ist, um warmen Wind zu der Vielzahl von Bürstenwalzen zu leiten, und/oder wobei die Staubauffangeinrichtung umfasst:
eine Verkleidung;
eine Luftabsorptions-Einheit, die sich in der Mitte der Verkleidung befindet und die Verkleidung in einen oberen Abschnitt und einen unteren Abschnitt teilt;
einen Filter, der in dem unteren Abschnitt der Luftabsorptions-Einheit angeordnet ist;
Luftabsorptions-Löcher, die an den Seitenwänden der Verkleidung an den Filter angrenzend ausgebildet sind; und
Ableitlöcher, die an dem oberen Ende der Verkleidung ausgebildet sind; und/oder wobei die Luftabsorptions-Einheit an dem Filter angeordnet ist und umfasst:
eine Luftabsorptions-Führung, die an dem Filter angeordnet ist und in der ein Hohlraum ausgebildet ist; und
ein Laufrad-Modul, bei dem ein Luftabsorptions-Flügel in dem Hohlraum angeordnet ist, um Luft in dem unteren Abschnitt zu absorbieren und Luft in dem oberen Abschnitt abzuleiten.

3. Vorrichtung zum Reinigen von Früchten nach Anspruch 2, wobei die oberen Enden der oberen Gehäuse über Balge mit den Ableitlöchern verbunden sind.

4. Vorrichtung zum Reinigen von Früchten nach Anspruch 1, wobei ein flexibles Gatter an der Eintrittsseite und ein flexibles Gatter an der Austrittsseite, die aus flexiblen Kunststoffplatten bestehen, vertikal zwischen beide Enden der oberen Gehäuse und der Bürstenwalzen an den oberen Gehäusen eingesetzt sind; und wobei wahlweise in dem flexiblen Gatter an der Eintrittsseite und dem flexiblen Gatter an der Austrittsseite eine Vielzahl von Einschnitt-Abschnitten, die erzeugt werden, indem das flexible Gatter vertikal von dem unteren Ende bis zu einer vorgegebenen Höhe eingeschnitten wird, voneinander um einen vorgegebenen Abstand getrennt sind.

5. Vorrichtung zum Reinigen von Früchten nach Anspruch 4,
wobei erste Sensoren zum Erfassen der Anzahl aufgenommener Früchte des Weiteren um das flexible Gatter an der Eintrittsseite herum ausgebildet sind; und/oder
zweite Sensoren zum Erfassen der Anzahl ausgegebener Früchte des Weiteren um das flexible Gatter an der Austrittsseite herum ausgebildet sind.

6. Vorrichtung zum Reinigen von Früchten nach Anspruch 5, wobei die ersten Sensoren und die zweiten Sensoren optische Sensoren, Näherungssensoren oder/und Lastsensoren sind.

7. Vorrichtung zum Reinigen von Früchten nach Anspruch 1 oder 4, die des Weiteren einen Steuerabschnitt umfasst, der mit dem Antriebsmotor, dem Gebläse, der Staubauffangeinrichtung, den ersten Sensoren und den zweiten Sensoren verbunden ist, um den Antriebsmotor, das Gebläse, die Staubauffangeinrichtung, die ersten Sensoren sowie die zweiten Sensoren zu steuern; und/oder
die ersten Sensoren sowie die zweiten Sensoren erfasste Signale zu dem Steuerabschnitt übertragen und der Steuerabschnitt akkumulierend die erfassten Signale der ersten Sensoren berechnet und die erfassten Signale der zweiten Sensoren von einem akkumulierend berechneten Wert subtrahiert, um die Stärke des Antriebsmotors, des Gebläses und der Staubauffangeinrichtung zu steuern und auszugeben.

8. Vorrichtung zum Reinigen von Früchten nach Anspruch 1, wobei die Vielzahl von Bürstenwalzen zylindrisch sind und an ihrem Außenumfang jeweils eine Vielzahl von Fellen aufweisen, und wobei wahlweise
die Vielzahl von Fellen Pferdefelle sind.

9. Verfahren zum Reinigen von Früchten, das umfasst:
einen Schritt zum Berechnen der Anzahl von Früchten, in dem die mit einer Vorrichtung zum Reinigen von Früchten zu reinigende Anzahl von Früchten berechnet wird;
einen Reinigungs-Schritt, in dem eine Blase-Stärke, eine Reinigungszeit und eine Vakuum-Absorptions-Stärke entsprechend der berechneten Anzahl von Früchten gesteuert werden; sowie
einen Schritt zum Auftragen eines Zusatzes, in dem die Anzahl von Früchten erfasst wird, die den Reinigungs-Schritt durchlaufen haben, und ein Zusatz entsprechend der Anzahl von Früchten gesteuert wird, um den Zusatz aufzusprühen.

10. Verfahren zum Reinigen von Früchten nach Anspruch 9, wobei der Schritt zum Berechnen der Anzahl von Früchten einen Akkumulier-Schritt, in dem die an einer Vorrichtung zum Reinigen von Früchten aufgenommene Anzahl von Früchten erfasst und akkumuliert wird, und einen Subtraktions-Schritt umfasst, in dem die Anzahl von Früchten erfasst wird, die den Reinigungs-Schritt durchlaufen haben, um die Anzahl von Früchten von dem mit dem Akkumulier-Schritt ermittelten akkumulierten Wert zu subtrahieren.

11. Verfahren zum Reinigen von Früchten nach Anspruch 9 oder 10, wobei der Reinigungs-Schritt des Weiteren einen Steuer-Schritt umfasst, in dem die Blas-Stärke, die Reinigungszeit und die Vakuum-Absorptions-Stärke entsprechend dem mit dem Subtraktions-Schritt ermittelten berechneten Wert neu gesteuert werden.

## Revendications

1. Appareil de lavage de fruits pour mettre en oeuvre des étapes de lavage de fruits pendant que les fruits sont transférés via une unité d'entraînement par rouleaux à brosse de l'appareil de lavage de fruits, l'unité d'entraînement par rouleaux à brosse étant constituée par un moteur d'entraînement, une pluralité de rouleaux à brosse et un moyen de transmission de force dynamique pour connecter le moteur d'entraînement à la pluralité de rouleaux à brosse, l'appareil de lavage de fruits comprenant en outre :
des couvercles inférieurs en forme de trémie positionnés sous la pluralité de rouleaux à brosse ;
un moyen de soufflage comprenant un ventilateur de soufflage connecté aux extrémités inférieures des couvercles inférieurs pour souffler de l'air vers la pluralité de rouleaux à brosse ;
des couvercles supérieurs qui sont positionnés au-dessus de la pluralité de rouleaux à brosse et dont les parties supérieures sont étroites et les parties inférieures larges pour être symétriques par rapport aux couvercles inférieurs ; et
un moyen de récolte des poussières connecté de manière étanche à l'air aux extrémités supérieures des couvercles supérieurs pour mettre en oeuvre une absorption d'air sous vide vers la partie supérieure de la pluralité de rouleaux à brosse ;
l'appareil de lavage de fruits comprenant en outre une partie de commande connectée au moteur d'entraînement, au ventilateur de soufflage et au moyen de récolte des poussières pour commander le moteur d'entraînement, le ventilateur de soufflage et le moyen de récolte des poussières.

2. Appareil de lavage de fruits selon la revendication 1, dans lequel le moyen de soufflage comprend en outre une chaudière connectée à la partie postérieure du ventilateur de soufflage pour fournir un souffle chaud à la pluralité de rouleaux à brosse ; et/ou dans lequel le moyen de récolte des poussières comprend :
un boîtier ;
une unité d'absorption d'air positionnée au centre du boîtier pour diviser le boîtier en une partie supérieure et une partie inférieure ;
un filtre positionné dans la partie inférieure de l'unité d'absorption d'air ;
des trous d'absorption d'air formés sur les parois latérales du boîtier, de manière adjacente au filtre ; et
des trous d'échappement formés sur l'extrémité supérieure du boîtier ; et/ou
dans lequel l'unité d'absorption d'air est positionnée sur le filtre et comprend :
un guide d'absorption d'air qui est positionné sur le filtre et dans lequel un creux est formé ; et
un module de turbine où une ailette d'absorption d'air est positionnée dans le creux pour absorber l'air dans la partie inférieure et pour rejeter l'air dans la partie supérieure.

3. Appareil de lavage de fruits selon la revendication 2, dans lequel les extrémités supérieures des couvercles supérieurs sont connectées aux trous d'échappement par des soufflets.

4. Appareil de lavage de fruits selon la revendication 1,
dans lequel une porte flexible côté entrée et une porte flexible côté sortie constituées de plaques en résine synthétique flexible sont chargées verticalement entre les deux extrémités des couvercles supérieurs et les rouleaux à brosse correspondant aux couvercles supérieurs ; et éventuellement
dans lequel, dans chacune des portes flexibles côté entrée et côté sortie, une pluralité de parties découpées obtenues en découpant verticalement la porte flexible depuis l'extrémité inférieure jusqu'à une hauteur prédéterminée sont séparées entre elles d'une distance prédéterminée.

5. Appareil de lavage de fruits selon la revendication 4,
dans lequel des premiers capteurs pour détecter le nombre de fruits reçus sont en outre agencés autour de la porte flexible côté entrée ; et/ou
dans lequel des deuxièmes capteurs pour détecter le nombre de fruits déchargés sont en outre agencés autour de la porte flexible côté sortie.

6. Appareil de lavage de fruits selon la revendication 5, dans lequel les premiers capteurs et les deuxièmes capteurs sont un ou plusieurs capteurs optiques, de proximité ou de charge.

7. Appareil de lavage de fruits selon la revendication 1 ou 4, comprenant en outre une partie de commande connectée au moteur d'entraînement, au ventilateur de soufflage, au moyen de récolte des poussières, aux premiers capteurs et aux deuxièmes capteurs pour commander le moteur d'entraînement, le ventilateur de soufflage, le moyen de récolte des poussières, les premiers capteurs et les deuxièmes capteurs ; et/ou
dans lequel les premiers capteurs et les deuxièmes capteurs transfèrent des signaux détectés à la partie de commande, et dans lequel la partie de commande calcule de manière cumulative les signaux détectés des premiers capteurs et soustrait les signaux détectés des deuxièmes capteurs d'une valeur calculée de manière cumulative pour commander et sortir la puissance du moteur d'entraînement, du ventilateur de soufflage et du moyen de récolte des poussières.

8. Appareil de lavage de fruits selon la revendication 1,
dans lequel la pluralité de rouleaux à brosse sont cylindriques et comportent une pluralité de poils sur leur circonférence externe ; et éventuellement
dans lequel la pluralité de poils sont des poils de cheval.

9. Procédé de lavage de fruits comprenant :
une étape de calcul du nombre de fruits consistant à calculer le nombre de fruits à laver par un appareil de lavage de fruits ;
une étape de lavage consistant à commander une quantité de soufflage, un temps de lavage et une valeur d'absorption d'air sous vide conformément au nombre de fruits calculé ; et
une étape de revêtement d'un additif consistant à détecter le nombre de fruits qui ont été soumis à l'étape de lavage et à commander l'application d'un additif conformément au nombre de fruits à pulvériser à l'aide de l'additif.

10. Procédé de lavage de fruits selon la revendication 9, dans lequel l'étape de calcul du nombre de fruits comprend : une étape d'accumulation consistant à détecter et à accumuler le nombre de fruits reçus par un appareil de lavage de fruits, et une étape de soustraction consistant à détecter le nombre de fruits qui ont été soumis à l'étape de lavage pour soustraire le nombre de fruits de la valeur accumulée obtenue à l'étape d'accumulation.

11. Procédé de lavage de fruits selon la revendication 9 ou 10, dans lequel l'étape de lavage comprend en outre une étape de commande consistant à commander de nouveau la quantité de soufflage, le temps de lavage et la quantité d'absorption d'air sous vide conformément à la valeur calculée obtenue à l'étape de soustraction.
